Europäisches Patentamt

European Patent Office

Office européen des brevets

(19)

(11) Veröffentlichungsnummer : **0 203 447**
**B1**

(12) # EUROPÄISCHE PATENTSCHRIFT

(45) Veröffentlichungstag der Patentschrift :
28.06.89

(51) Int. Cl.⁴ : **A 22 C 17/12, A 22 C 25/17**

(21) Anmeldenummer : 86106489.7

(22) Anmeldetag : 13.05.86

(54) Maschine zum Entschwarten oder Enthäuten von Fleisch oder Fisch.

(30) Priorität : 22.05.85 DE 3518341

(43) Veröffentlichungstag der Anmeldung :
03.12.86 Patentblatt 86/49

(45) Bekanntmachung des Hinweises auf die Patenterteilung : 28.06.89 Patentblatt 89/26

(84) Benannte Vertragsstaaten :
AT BE CH DE FR GB IT LI NL SE

(56) Entgegenhaltungen :
CA--A-- 387 480
CH--A-- 468 154
DE--A-- 3 409 933
DE--U-- 8 435 693
FR--A-- 2 441 339
FR--A-- 2 491 297
US--A-- 2 912 027

(73) Patentinhaber : **Maja-Maschinenfabrik Hermann Schill GmbH**
**Tullastrasse 4**
**D-7640 Kehl-Goldscheuer (DE)**

(72) Erfinder : **Schill, Hermann**
**Merkurstrasse 14**
**D-7640 Kehl-Goldscheuer (DE)**

(74) Vertreter : **Patentanwälte Dipl.-Ing. Hans Schmitt**
**Dipl.-Ing. Wolfgang Maucher**
**Dreikönigstrasse 13**
**D-7800 Freiburg i.Br. (DE)**

## Beschreibung

Die Erfindung betrifft eine Maschine zum Entschwärten oder Enthäuten von Fleisch oder Fisch, insbesondere zum Speckentschwarten, mit einem Messer, einer Zugwalze sowie einer Zuführeinrichtung, die für ein maschinelles oder manuelles Zuführen des Abschwartgutes od. dgl. Behandlungsgut umstellbar ausgebildet ist, wobei für das maschinelle Zuführen eine mit einem Transportband od. dgl. versehene maschinelle Zuführung sowie für das manuelle Zuführen ein vor der Zugwalze anbringbarer Auflagetisch vorgesehen sind und der Abstand einer Bedienstelle zur Bearbeitungsstelle veränderbar, insbesondere für ein manuelles Zuführen verkürzbar ist.

Derartige Maschinen sind bereits bekannt und vertrieben worden. Solche Maschinen zum Entschwarten oder Enthäuten von Fleisch oder Fisch, nachstehend auch kurz « Speckentschwartungsmaschine » oder « Maschine » genannt, haben den Vorteil, daß einerseits zu entschwartende Speckplatten maschinell z. B. mit Hilfe eines Transportbandes zur Bearbeitungsstelle bewegt werden, während in seiner Form größeres, z. B. keulenförmiges Abschwartgut unter Verwendung des Auflagetisches gut bearbeitet werden kann. Die Maschine ist somit universell für verschiedene Anwendungen einsetzbar. Solche Maschinen haben sich in der Praxis bewährt. Dazu trägt u. a. bei, daß die Bedienstelle, also der Platz, auf der die Bedienungsperson steht, in ihrem Abstand zur Bearbeitungsstelle in Anpassung an die unterschiedlichen Bearbeitungssituationen veränderbar ist.

Derartige, vorbekannte Maschinen sind jedoch noch verbesserungsbedürftig. Beispielsweise soll namentlich beim Bearbeiten von flächigem Abschwartgut, welches gewöhnlich mit Hilfe einer maschinellen Zuführung der Bearbeitungsstelle zugeführt wird, aus Sicherheitsgründen der Bereich vor der Zugwalze gegen einen unbeabsichtigten Zugriff der Bedienungsperson geschützt sein. In der Praxis wird dies häufig dadurch realisiert, daß die gewöhnlich mit einem Transportband od. dgl. versehene maschinelle Zuführeinrichtung mittels einer gitterartigen Abdeckung im Bereich der Zugwalze und des Messers gesichert ist. Dadurch wird bei solchen, gewöhnlich mit kontinuierlich laufendem Transportband arbeitenden Maschinen praktisch verhindert, daß eine Bedienungsperson, die z. B. mit ihren Händen von dem der Maschine zuzuführenden Abschwartgut abrutscht, vom laufenden Transportband in Richtung des gefährlichen Bereiches der Maschine, nämlich der Zugwalze und dem Messer, bewegt wird. Solche mit maschineller Zuführung versehenen Maschinen, die eine Zugriffssicherung aufweisen, sind dann aber zum Entschwarten oder Enthäuten von ganzen Schinken, größeren runden Stücken wie z. B. Keulen, Schultern praktisch ungeeignet.

Es besteht daher die Aufgabe, eine Maschine der eingangs erwähnten Art zu schaffen, die gut wahlweise einerseits eine Bearbeitung von flachem Abschwartgut unter maschinellen Zuführen und andererseits auch eine Bearbeitung von größeren, insbesonderen runden Stücken, z. B. ganzen Schinken, Eisbeinen od. dgl. ermöglicht, wobei ein einfaches Umstellen der Maschine von der einen in die andere Arbeitsweise unter günstiger Anpassung des Abstandes der Bedienstelle zur Bearbeitungsstelle möglich ist und die Maschine, insbesondere bezüglich ihres Grundriß-Platzbedarfes, kompakt ausgebildet ist.

Die erfindungsgemäße Lösung dieser Aufgabe besteht insbesondere darin, daß die mindestens an ihrem zugwalzenseitigen Ende mit einem Zugriffschutz versehene maschinelle Zuführung mit dem vollständigen Transportband abklappbar ist und der Zugriffschutz der maschinellen Zuführung in abgeklappter Lage als Stütze für den Auflagetisch dient.

Bei einer solchen Maschine nimmt die gewöhnlich mit einem Transportband versehene maschinelle Zuführung im abgeklappten Zustand zwischen der Bearbeitungsstelle und der Bedienungsperson nur noch einen minimalen Platz ein und das Transportband sowie die zugehörige Bandhalterung kann einfach ausgebildet sowie z. B. unter Stillsetzen oder wahlweise Weiterlaufen des Transportbandes in die abgeklappte Stellung gebracht werden, wobei in dieser der Zugriffschutz der maschinellen Zuführung gleichzeitig die Auflage für einen Auflagetisch bildet, auf den das Abschwartgut zur manuellen Zuführung aufgelegt werden kann. Die Bearbeitungsstelle ist für die Bedienungsperson vergleichsweise nahe und gut zugänglich. Die der Maschine zugeordnete Bedienstelle für die Bedienungsperson wird dadurch in erwünschter Weise etwas geräumiger.

Zwar zeigt die bekannte Entschwartungsmaschine auch schon die Möglichkeit einer Verkürzung der horizontalen Ausdehnung des Transportbandes und damit die Möglichkeit der Verkleinerung des Abstandes zwischen Bedien- und Bearbeitungsstelle. Jedoch ist dort nicht nur die Verringerung dieses Abstandes begrenzt sondern sowohl der Herstellungs- als auch der Bedienungsaufwand dieser Maschine, die in der Arbeitsstellung für das manuelle Zuführen des Abschwartgutes ein etwa rechtwinklig abgeknicktes Förderband hat, ist verhältnismäßig aufwendig.

Weiterbildungen der Erfindung sind in den Unteransprüchen aufgeführt. Besonders platzsparend ist eine Ausführung, bei welcher die gesamte maschinelle Zuführung bis in eine mindestens etwa lotrechte Lage abklappbar ist. Bei der Ausführung nach Anspruch 3 ist einerseits eine gute Zugriffs-Sicherung für die Bedienungsperson gegeben, die andererseits über die Gitterstäbe den Arbeitsablauf laufend praktisch unbehindert beobachten kann. Gemäß Anspruch 4 gestaltet sich die maschinelle Zuführung und ihr Verschwenken in die Abklapp- oder Arbeitsstellung vergleichsweise einfach. Gemäß Anspruch 5 sind das Anbringen sowie das Ein- und Ausbauen der Andruckwalze besonders einfach, was bei dem erwünschten häufigen Reinigen solcher Maschinen sich günstig auswirkt.

Anspruch 6 zeigt eine besonders einfache Ausbildung und Anbringungsmöglichkeit für den Auflagetisch. Dieser erhält mit Hilfe der Maßnahme nach Anspruch 7 besonders im Bereich der Antriebswelle für das Transportband mit einfachen Mitteln eine sichere Abstütze. Die maschinelle Zuführung wird zwar nach bevorzugter Ausführung ein Transportband aufweisen, wie später im Ausführungsbeispiel gezeigt wird ; vom Prinzip her könnte dieses angetriebene Transportband auch durch einen angetriebenen Rollengang ersetzt werden.

Gemäß Anspruch 8 weist der Zugriffsschutz ergänzend eine Schutzhaube auf und die abklappbare maschinelle Zuführung ist in ihrer Schließstellung mit der in Betriebsstellung befindlichen Schutzhaube verriegelbar, vorzugsweise mittels Schwenkriegel. Auf diese Weise erhält man mit einfachen technischen Mitteln ein Zusammenwirken der Schutzhaube im Bereich der Andruckwalze und im Anschluß an die Gitterstäbe des zugwalzenseitigen Endes der maschinellen Zuführung, wobei durch das Verkuppeln auch noch gewissermaßen automatisch gesichert ist, daß diese Schutzhaube geschlossen ist, wenn sich die mechanische Zuführung in der Betriebsstellung befindet. Fehlbedienungen sind deshalb weitestgehend ausgeschlossen.

Die Maßnahmen der Ansprüche 9 bis 11 begünstigen eine kompakte Bauweise der Maschine einschließlich der Unterbringungsmöglichkeiten für den abgeschwarteten Speck od. dgl. bzw. seiner abgetrennten Schwarte sowie ein einfaches Trennen von Speck seiten und Schwarte. Die Maßnahme des Anspruches 12 begünstigt die Bedienbarkeit der mechanischen Zuführung beim Auf- und Abklappen und die Maßnahmen des 13. Anspruches begünstigen das Reinigen dieser mechanischen Zuführung im Zwischenbereich zwischen dem oberen und dem unteren Trum des Transportbandes.

Zusätzliche Weiterbildungen und Einzelheiten der Erfindung werden nachstehend in Verbindung mit der Zeichnung noch näher erläutert.

Es zeigen, etwas schematisiert und in unterschiedlichen Maßstäben :

Fig. 1 eine teilweise im Schnitt gehaltene Seitenansicht einer Entschwartungsmaschine,

Fig. 2 eine Teilseitenansicht ähnlich Fig. 1 im Bereich von Andruck- und Zugwalze, zwischen denen sich in Bearbeitung befindliches Abschwartgut befindet,

Fig. 3 eine Stirnansicht nach Fig. 1 entsprechend der Blickrichtung A in Fig. 1,

Fig. 4 eine teilweise im Schnitt gehaltene Seitenansicht ähnlich Fig. 1 bei nach oben weggeklappter Schutzhaube und nach unten abgeklappter maschineller Zuführung und

Fig. 5 einen vergrößerten Teilausschnitt in der Gegend der Antriebswelle des Transportbandes ähnlich der Ausführung nach Fig. 4.

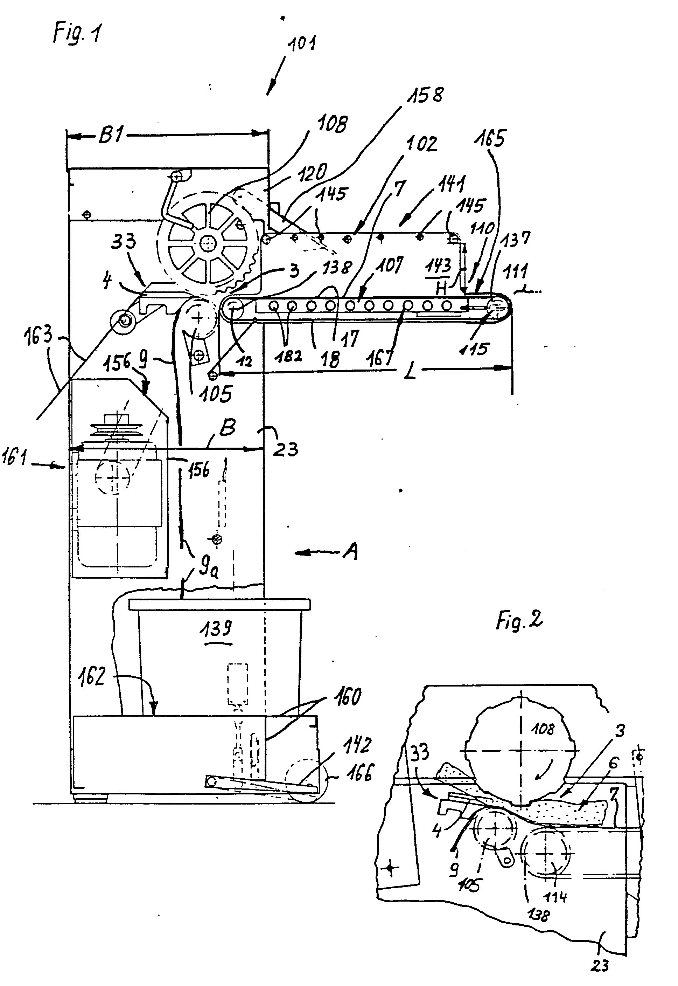

Eine im ganzen mit 101 bezeichnete Abschwartmaschine, nachfolgend auch kurz « Maschine 101 » genannt, dient insbesondere zum Entscharten von Speck, zum Enthäuten von Schinken, Fisch, zum Speckplattenschneiden usw. Im Ausführungsbeispiel gemäß Fig. 1 weist die Maschine 101 eine Zuführeinrichtung 102 auf, mittels der das Abschwartgut od. dgl. Behandlungsgut 6 einer Bearbeitungsstelle 3 (vgl. Fig. 1 u. 2) zugeführt werden kann. Bei dieser befindet sich ein in einem Messerhalter 33 eingespanntes Messer 4 sowie eine Zugwalze 105. Das im wesentlichen flache Abschwartgut 6 od. dgl. wird von einem zur Zuführeinrichtung 102 gehörenden Transportband 7 der Zugwalze 105 zugeführt, wobei es gleichzeitig von einer gegenüber der Zugwalze 105 angeordneten Andruckwalze 108 gedrückt und geglättet wird. Die Schwarte 9 des Abschwartgutes 6 wird zwischen Zugwalze 105 und Messer 4 eingezogen und vom Speck getrennt.

Bei dem vorgeschriebenen Speckentschwartungsvorgang läuft das Zuführen und Entscharten maschinell ab, so daß eine Bedienperson nur den Speck auf das Transportband 7 bei dessen Aufnahmeende 110 auflegen muß. Schinken oder größere Fleischteile können in der in Fig. 1 gezeigten Betriebslage der Maschine 101 nicht bearbeitet werden.

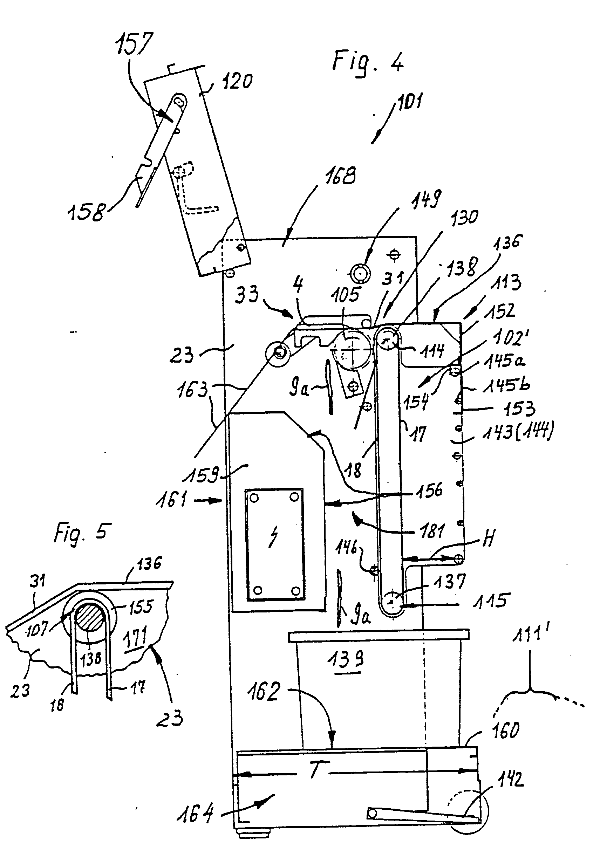

Erfindungsgemäß ist nun vorgesehen, daß die Zuführeinrichtung 102 insgesamt für eine maschinelle Zuführung wie vorbeschrieben eingestellt und andererseits auch für eine manuelle Zuführung von größerem Abschwartgut umgestellt werden kann. Für eine manuelle Bearbeitung und Zuführung von Abschwartgut läßt sich der Abstand zwischen Bedienstelle 111 und Bearbeitungsstelle 3 verkürzen (vgl. Fig. 4), so daß eine Bedienperson das Abschwartgut bei der Bearbeitungsstelle 3 entsprechend gut handhaben kann.

Dieses Verkürzen des Abstandes für eine manuelle Zuführung von Abschwartgut erfolgt im Ausführungsbeispiel nach Fig. 1 bis 5 durch Abklappen der maschinellen Zuführung 107 nach unten. Oberhalb des verbleibenden Transportband-Abschnittes ist dann ein Auflagetisch 113 angebracht, wie in Fig. 4 gut erkennbar.

Zur manuellen Zuführung und Bearbeitung von Abschwartgut od. dgl. wird die Andruckwalze 108 zusammen mit einer Schutzhaube 120 nach oben geschwenkt, so daß die Bearbeitungsstelle 3 zugänglich ist. Als Auflage und zum Zuführen des Abschwartgutes 6 dient dann der Auflagetisch 113.

An das Transportband 7, das in Fig. 1 in Betriebsstellung dargestellt ist, schließt sich, in Transportrichtung gesehen, die Zugwalze 105 an, welche das Abschwartgut 6 od. dgl. gegen das Messer 4 fördert. In bekannter Weise wird dann z. B. zu entschwartendem Speck die Speckschwarte 9 abgetrennt und zwischen dem Messerhalter 33 und der Zugwalze 105 nach unten umgelenkt, wo diese Schwarte 9 oder Stücke 9 a davon in einen Schwartenkübel 139 aufgesammelt werden kann. Wie bekannt, ist oberhalb einer Antriebswalze 138 des Transportbandes 7 sowie der Zugwalze 105 eine Andruckwalze 108 vorgesehen, die gewöhnlich aus zylindrischen Abschnitten 140, die aus Gummi bestehen, gebildet ist. Wenn die Zuführeinrichtung 102 sich in Betriebsstellung (Fig. 1) befindet, hat die Bedienstelle 111, also der Platz, an dem sich eine Bedienungsperson für die Maschine 101 befindet, einen erheblichen, durch die Länge L der Zuführeinrichtung 102 vorgegebenen Abstand zum gefährlichen Bereich der Maschine 101, der sich im Bereich der Zugwalze 105 und Messer 4 befindet. Bei der Maschine 101 ist bei Inbetrieb befindlicher Zuführeinrichtung 102 eine besondere, nachstehend noch näher erläuterte Zugriffssperre 141 vorgesehen. Es gehört nun mit zu einer Weiterbildung der Erfindung, daß die das Transportband 7 und diese Zugriffssperre 141 mitumfassende Zuführeinrichtung 102 insgesamt abklappbar ausgebildet ist, wie es ein Vergleich von Fig. 1 mit Fig. 4 gut zeigt, und daß auf das dann obere stirnseitige Ende der abgeklappten Zuführeinrichtung 102 ein Auflagetisch 113 aufgesetzt ist. Bei der Abgabeseite 130 der Auflagefläche 136 des Tisches 113 ist, wie bei Fig. 5 gut sichtbar, eine Übergangsschräge 31 vorgesehen.

Die Zuführeinrichtung 102 ist abklappbar (Fig. 4) ausgebildet. In der Betriebsstellung (Fig. 1) ist die Zuführeinrichtung 102, bis auf ihr Aufnahmeende 110, gegenüber dem Zugriff einer Bedienungsperson geschlossen. Dabei weist die abklappbare Zuführungseinrichtung 102 im wesentlichen geschlossene Seitenflansche 143, 144 auf, an deren Oberrand Gitterstäbe 145 vorgesehen sind oder ein ähnlicher undurchgreifbarer, jedoch durchschaubarer Abschluß. Dieser kann neben der bevorzugten Ausführung mit Gitterstäben 145 auch von einer durchsichtigen Scheibe z. B. aus Glas oder Kunststoff gebildet sein. Jedoch stellen die Gitterstäbe 145 eine bevorzugte Ausführungsform dar, weil sie gleichzeitig mit einer noch näher zu beschreibenden Verriegelung 157 gut zusammenarbeiten können und auch das Reinigen der Maschine 101 im Bereich der Zuführeinrichtung 102 erleichtern. In bekannter Weise ist die Länge L und die lichte Höhe H beim Aufnahmeende 110 der Zuführeinrichtung 102 so bemessen, daß eine Bedienungsperson mit ihrem Arm nicht bis in den Gefahrenbereich gelangen kann, also in den Bereich von Zugwalze 105 und Messer 4.

Die abklappbare Zuführungseinrichtung 102 ist in ihrer Abklappstellung (Fig. 4) mittels eines maschinenfesten Anschlages 146 in ihrer natürlichen Tiefstlage festgelegt. Dies hat den Vorteil, daß es für sie für diese Stellung keiner besonderen Arretiermittel bedarf. Auf die Auflagefläche 136 des auf die abgeklappte Zuführungseinrichtung 102' aufgesetzten Auflagetisches 113 kann ohne weiteres Druck und/oder Gewicht aufgebracht werden. Wegen des erwähnten Anschlages 146 kann dennoch die abgeklappte Zuführungseinrichtung 102 keine Pendelbewegungen ausführen sondern sie wird wegen der Belastung des Auflagetisches 113 nur noch besser in ihre Tiefstellung festgelegt.

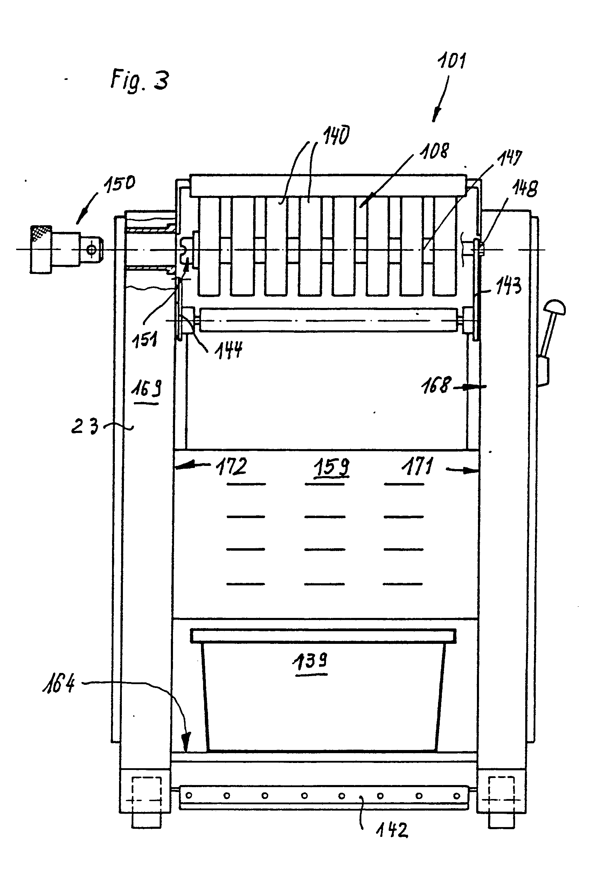

Die Andruckwalze 108 ist ortsfest und ausbaubar im Maschinengehäuse 23 angebracht. Man erkennt dazu im rechten Ständerteil 168 des Maschinengehäuses 23 (Fig. 3 u. 4), daß die Maschine 101 eine Mitnehmerkupplung 149 hat, in die das antriebsseitige Ende der Welle 147 der Andruckwalze 108 einsteckbar ist. An der anderen, (der in Fig. 3 dem linken Ständerteil 169 entsprechenden) Seite ist ein entfernbares Bajonettverschluß-Lager 150 zu erkennen, das im Ausführungsbeispiel nach Fig. 3 vom entsprechenden Anschlußteil 151 und dem Ständerteil 169 der besseren Übersicht halber wegen getrennt dargestellt ist. Man erkennt gut, daß bei entsprechend entferntem Bajonettverschluß-Lager 150 die Andruckwalze 108 leicht ausbaubar ist. Dazu hat die Andruckwalze 108 eine Welle 147, die an ihrem Antriebsende 148 ein entsprechendes Gegenstück zu der Mitnehmerkupplung 149 aufweist. Ferner ist an dem anderen Ende dieser Welle 147 ein Anschlußteil 151 für das Bajonettverschluß-Lager vorgesehen. Bei einer im Maschinengehäuse 23 unmittelbar gelagerten Andruckwalze 108 gemäß Fig. 1, 3, 4 sind die Maßnahmen zum Ein- und Ausbau einer bezüglich ihrer Umfangsgeschwindigkeit synchron zur Zugwalze 105 laufenden Andurckwalze 108 besonders einfach, weil mit Antriebsmitteln versehene Schwenkhebel und dgl. vermieden werden können. Bei geöffneter Schutzhaube 120 ist die Andruckwalze 108 leicht ausbaubar, was nicht nur dem einfachen Bedienen sondern auch dem schnellen Reinigen der Maschine zugute kommt.

In den Fig. 1 und 4, die in einem schematischen Mittellängsschnitt dargestellt sind, erkennt man gut, daß der Auflagetisch 113 im wesentlichen von einem abgewinkelten Blechteil 152 gebildet ist. Dessen einer Schenkel bildet dabei die Tischauflagefläche 136 und dessen anderer Schenkel dient als Abdeck- und Befestigungsteil 153 zur Auflage auf die in abgeklappter Stellung der Zuführungseinrichtung 102 oberen Gitterstäbe 145 a u. 145 b. Dabei ist das Abdeck- und Befestigungsteil 153 mit einem Haltehaken 154 zum Hintergreifen des Gitterstabes 145 a vorgesehen. Wie in der schematischen, stark vergrößerten Darstellung eines Teilausschnittes nach Fig. 5 gut erkennbar, sind am Maschinengehäuse 23 an den Austrittsbereichen der Antriebswelle 138 maschinenfeste Auflageflansche 155 vorgesehen, an denen sich die Auflagefläche 136 des Auflagetisches 113 mit geringem Abstand vom Transportband 107 abstützen kann. Man erhält eine feste Lagerung des Tisches 113 ohne praktisch ins Gewicht fallenden Aufwand.

Die abklappbare Zuführungseinrichtung 102 ist in ihrer Betriebsstellung (Fig. 1) über eine im ganzen mit 157 bezeichnete Verriegelung mit der in ihrer Schließstellung befindlichen Schutzhaube 120 festlegbar. Die Verriegelung 157 ist dabei mittels zweier Schwenkriegel 158 verbunden, die einerseits an der Schutzhaube 120 schwenkbar angelenkt sind (Fig. 4) und mit ihrem freien Ende hakenartig einen Gitterstab 145 b od. dgl. Halteelement der Zuführungseinrichtung 102 in deren Betriebsstellung untergreifen (Fig. 1). Durch die Verbindung von Schutzhaube 120 und abklappbarer Zuführungseinrichtung 102 in der Obenstellung dieser Bandhalterung wird berwirkt, daß die Sicherheitsschaltung für die Schutzhaube 120 gewährleistet, daß der Dauerbetrieb (konstantes Durchlaufen der Zugwalze 105 und des Transportbandes 7) nur dann möglich ist, wenn einerseits die Schutzhaube 120 in der abgeklappten und andererseits die Zuführungseinrichtung 102 in der hochgeklappten Betriebsstellung sich befindet. Man erreicht mit einfachen Mitteln die Sicherung der Maschine 101.

Für den « offenen » Betrieb, also bei hochgeklappter Schutzhaube 120 und abgeklappter Zuführungseinrichtung 102 wird der elektrische Antrieb der Maschine 101 derart geschaltet, daß die Zugwalze 105 sich nur bewegt, wenn ein Fußpedal 142 (Fig. 1 bis 4) niedergetreten wird. Durch das Abklappen der gesamten Zuführungseinrichtung 102 (Fig. 1, 3, 4) erreicht man, daß die Bedienstelle 111' (Fig. 4) wesentlich näher am Maschinengehäuse 23 und damit auch wesentlich näher an der Bearbeitungsstelle 3 liegt, als dies bei hochgeklappter Zuführungseinrichtung 102 gemäß Fig. 1 der Fall ist.

Die Bedienungsperson hat entsprechend mehr Platz, um ungestört im offenen Handbetrieb Schinken, Keulen od. dgl. dem Messer 4 über den Auflagetisch 113 zuzuführen. Wie besonders Fig. 3 gut zeigt, ist das Maschinengehäuse 23, in Frontansicht gesehen, im wesentlichen U-förmig ausgebildet. Man erkennt dort die Basis 164, die dem U-Steg entspricht, und den rechten sowie linken Ständerteil 168, 169, die den jeweiligen freien U-Schenkeln entsprechen. An deren oberen Enden sind die Schutzhaube 120, die Zugwalze 105, der Messerhalter 33 mit dem Messer 4 usw. angebracht.

Im Bereich der Basis 164 befindet sich das Fußpedal 142. Die Bandhalterung 135' befindet sich in abgeklappter Stellung (Fig. 4) in dem offenen Bereich des U-förmigen Maschinengeshäuses 23 innerhalb des lichten Bereiches der U-förmigen Gehäusekontur. In diesem lichten Bereich ist auch ein Antriebs- und Schaltgehäuse 159 angeordnet; im Seitenprofil gesehen befindet es sich etwa parallel und benachbart zu der abgeklappten Zuführungseinrichtung 102, wobei zwischen diesem Gehäuse 159 und der ihn benachbarten Seite der abgeklappten Zuführungseinrichtung 102' ein Schacht 181 freibleibt, der sich etwa lotrecht unterhalb der Zugwalze 105 befindet und durch den die Schwarte 9, Schwarten- oder Hautstücke 9 a von der Zugwalze 105 in den Schwartenkübel 139 fallen können. Dabei ist es vorteilhaft, wenn das Antriebs- und Schaltgehäuse 159 an seiner der Zuführungseinrichtung 102 zugewandten Seite von einem oben zur Rückseite 161 der Maschine 101 abgewinkeltem Führungsblech 156 begrenzt ist. Dieses Blech führt mit seiner Abschrägung zusammen mit der Unterseite der Zuführungseinrichtung 102' so, daß die Schwartenteile 9 a oder dgl. in den Schwartenkübel 139 fallen.

In Fig. 4 erkennt man noch gut, daß sich oberhalb des Fußpedals 142 in bekannter Weise ein im Querschnitt im wesentlichen Z-förmiger Pedal-Schutzbügel 160 befindet. Eine Weiterbildung der Erfindung besteht darin, daß die Oberseite des Pedal-Schutzbügels 160 in Richtung der Maschinen-Rückseite 161 unterhalb der abeklappten Zuführungseinrichtung 102' als Stellfläche 162 für den Schwartenkübel 139 ausgebildet ist. Auf diese Weise kann mit einfachen Mitteln eine Stellfläche 162 geschaffen werden, die sich unterhalb des vorerwähnten Schachtes 181 befindet; die Schwartenkübel 139 sind dabei leicht austauschbar und es ergeben sich bei der Maschine 101 an den Innenflächen 171 bzw. 172 der Ständerteile 168 u. 169 sowie an der Stellfläche 162 glatte, bei hochgeklappter Zuführungseinrichtung 102 gut zu reinigende Oberflächen. Am Messerhalter 33 befindet sich ein Ablaufblech 163, das von diesem Messerhalter 33 an über die Rückseite 161 aus der Maschine 101 schräg nach unten herausführt, wobei dieses Ablaufblech 163 das Antriebs- und Schaltgehäuse 159 oben dachförmig abdeckt. Dadurch erreicht man, daß das von der Schwarte 9, Haut od. dgl. befreite Abschwartgut 6 od. dgl. Behandlungsgut außerhalb des Bereiches der Maschine 101 leicht aufgefangen werden kann, z. B. durch einen (nicht dargestellten) Kübel; ferner ist mit sehr einfachen, platzsparenden Mitteln eine sichere Trennung zwischen dem entschwarteten, über das Ablaufblech 163 ausgetragene Gut einerseits und den in den Schwartenkübel 139 fallenden Teilen andererseits ermöglicht.

Die Maschine 101 kann bezüglich ihrer Tiefe sehr kompakt ausgeführt werden. Die Tiefe ihrer Basis 164 ist in Fig. 4 mit T bezeichnet und man erkennt dort gut, daß das Antriebs- und Schaltgehäuse 159 einerseits und die abgeklappte Zuführungseinrichtung 102' andererseits die Tiefe T der Basis der Maschine 101 nicht überschreiten.

Eine besonders vorteilhafte Weiterbildung der Maschine ist noch gut aus Fig. 1 zu erkennen. Die beiden Seitenflansche 143 u. 144 der abklappbaren Zuführungseinrichtung 102 sind im Bereich der Umlenkrolle 137 als Handgriffe 165 ausgebildet. Ist die Zuführungseinrichtung 102 mit der Schutzhaube 120 und somit mit dem gesamten Maschinengehäuse 23 verriegelt, kann man die gesamte Maschine 101 mit Hilfe dieser Handgriffe 165 etwas über die an der Maschinen-Basis 164 angebrachten Rollen 166 kippen und schubkarrenartig mit wenig Aufwand bewegen. In Fig. 1 erkennt man noch, daß die Seitenflansche 143, 144 im Zwischenbereich 167 zwischen dem oberen und dem unteren Trum 17, 18 des Transportbandes 7 Lochungen 182 aufweisen, die der besseren Übersicht wegen in Fig. 4 weggelassen sind. Durch diese Lochungen 182 hindurch wird der Zwischenbereich zwischen den beiden Trums 17, 18 des Transportbandes 7 gut für Spülwasser zugänglich, z. B. indem man dort mit einem Schlauch hineinsprüht. Dadurch wird die Reinigung der Maschine auf einfache Weise erleichtert.

Beim « offenen Entschwarten » wird die Zuführungseinrichtung 102 nach unten in ihre stabile Lage gemäß Fig. 4 geschwenkt. Zusammen mit dem Auflagetisch 113 und seinem abgewinkelten Blechteil 152 bildet dann die Zuführeinrichtung eine Schutzeinrichtung für die Bedienungsperson bezüglich eines unerwünschten Zugriffes in den Bereich der Zugwalze 105. Andererseits ist die Kombination der Schutzhaube 120 mit der Verriegelung 157 für die Obenstellung der Zuführungseinrichtung 102 sehr vorteilhaft. Zum Festlegen der Zuführungseinrichtung 102 in der Betriebsstellung muß die Schutzhaube ebenfalls stets in ihrer abgeklappten Schutzposition (Fig. 1) sein. Es werden also zwei bewegliche Maschinenteile (Schutzhaube 120 und Zuführungseinrichtung 102) jeweils in ihrer zum Schutz dienenden Position miteinander verriegelt, und zwar mit sehr einfachen Mitteln. Das Tischblech 113 ist sehr einfach in Herstellung, Bedienung sowie Montage und kann auch gut gereinigt werden. Das Umrüsten der Maschine 101 von automatischem Zuführbetrieb mit in Betriebsstellung befindlicher Zuführungseinrichtung 102 (Fig. 1) in die Funktionslage für « offenes Entschwarten » (Fig. 4) ist denkbar einfach.

**Patentansprüche**

1. Maschine (101) zum Entschwarten oder Enthäuten von Fleisch oder Fisch, insbesondere zum Speckentschwarten, mit einem Maschinengehäuse, einem Messerhalter, einem Messer (4), einer Zugwalze (105) sowie einer Zuführeinrichtung (102), die für ein maschinelles oder manuelles Zuführen des Abschwartgutes (6) od. dgl. Behandlungsgut umstellbar ausgebildet ist, wobei für das maschinelle Zuführen eine mit einem Transportband od. dgl. (7) versehene maschinelle Zuführung (107) sowie für das manuelle Zuführen ein vor der Zugwalze (105) anbringbarer Auflagetisch (113) vorgesehen und der Abstand einer Bedienstelle (111) zur Bearbeitungsstelle (3) veränderbar, insbesondere für ein manuelles Zuführen verkürzbar ist, dadurch gekennzeichnet, daß die mindestens an ihrem zugwalzenseitigen Ende mit einem Zugriffschutz (141) versehene maschinelle Zuführung (107) mit dem vollständigen Transportband (7) abklappbar ist und der Zugriffschutz (141) der maschinellen Zuführung in abgeklappter Lage als Stütze für den Auflagetisch (113) dient.

2. Maschine nach Anspruch 1, dadurch gekennzeichnet, daß die gesamte maschinelle Zuführung (107) bis in eine mindestens etwa lotrechte Lage abklappbar ist.

3. Maschine nach Anspruch 1 oder 2, dadurch gekennzeichnet, daß die maschinelle Zuführung (107) od. dgl. Abklappteil als eine in Betriebsstellung bis auf ihr Aufnahmeende (110) gegenüber dem Zugriff einer Bedienungsperson geschlossene Zuführeinrichtung (102) ausgebildet ist und vorzugsweise im wesentlichen geschlossene Seitenflansche (143, 144) hat, an deren Oberrand zweckmäßigerweise Gitterstäbe (145) od. dgl. einen undurchgreifbaren, jedoch durchschaubaren Abschluß bilden.

4. Maschine nach einem der Ansprüche 1 bis 3, dadurch gekennzeichnet, daß ihre abklappbare maschinelle Zuführung (107) um eine mindestens in der Nähe der Antriebswalze (138) für das Transportband (7) liegende Schwenkachse abklappbar ist, zweckmäßigerweise die Schwenkachse (12) dieser maschinellen Zuführung (107) und die Drehachse dieser Antriebswalze (138) zusammenfallen, wobei vorzugsweise die abklappbare maschinelle Zuführung (107) in ihrer Abklappstellung mittels maschinenfesten Anschlages (146), vorzugsweise in der natürlichen Tiefstlage dieser abklappbaren Zuführung (107) od. dgl. festlegbar ist.

5. Maschine nach einem der Ansprüche 1 bis 4, dadurch gekennzeichnet, daß eine Andruckwalze (108) ortsfest und austauschbar im Maschinengehäuse (23) angebracht ist, wobei diese Andruckwalze vorzugsweise eine Welle (147) hat, die an ihrem Antriebsende (148) ein Gegenstück zu einer Mitnehmerkupplung (149) und an ihrem anderen Ende ein Anschlußteil (151) für ein entfernbares Bajonettverschluß-Lager (150) hat.

6. Maschine nach einem der Ansprüche 1 bis 5, dadurch gekennzeichnet, daß der Auflagetisch (113) im wesentlichen von einem abgewinkelten Blechteil (152) gebildet ist, dessen einer Schenkel eine Tischauflagefläche (136) bildet und dessen anderer Schenkel als Abdeck- und Befestigungsteil (153) zur Auflage auf die in abgeklappter Stellung der maschinellen Zuführung (107) oberen Gitterstäbe (145a, 145b) od. dgl. Zugriffsschutz-Teile vorgesehen ist, wobei das Abdeck- und Befestigungsteil (153) vorzugsweise einen Haltehaken (154) zum Hintergreifen wenigstens eines Gitterstabes (145a) od. dgl. aufweist.

7. Maschine nach einem der Ansprüche 1 bis 6, dadurch gekennzeichnet, daß am Maschinengehäuse (23) an den Austrittsbereichen der Antriebswalze (138) maschinengehäusefeste Auflageflansche (155) vorgesehen sind, an denen sich die Auflagefläche (136) des Auflagetisches (113) mit geringem Abstand vom Transportband (7) abstützen kann.

8. Maschine nach einem der Ansprüche 1 bis 7, dadurch gekennzeichnet, daß die abklappbare maschinelle Zuführung (107) über eine Verriegelung (157) mit einer in ihrer Schließstellung befindlichen Schutzhaube (120) in ihrer Betriebsstellung festlegbar ist, wobei vorzugsweise Schwenkriegel (158) einerseits an der Schutzhaube (120) angelenkt sind und mit ihrem freien Ende hakenartig einen Gitterstab (145b) od. dgl. Halteelement untergreifen.

9. Maschine nach einem der Ansprüche 1 bis 8, dadurch gekennzeichnet, daß das Maschinengehäuse (23) in Frontansicht gesehen im wesentlichen U-förmig ausgebildet ist, daß es im Bereich der oberen, freien U-Schenkel die Schutzhaube (120), die Zugwalze (105), das Messer (4) usw. trägt sowie im Bereich des U-Steges unten ein Fußpedal (142) aufweist, wobei im offenen Bereich des U-förmigen Maschinengehäuses (23) die maschinelle Zuführung (107) in die abgeklappte Stellung in den lichten Bereich der U-Schenkel eintritt und sich vorzugsweise in diesem lichten Bereich dieser U-Schenkel ein Antriebs- und Schaltteilgehäuse (159), benachbart, jedoch mit Abstand zur abgeklappten Zuführungseinrichtung (102) befindet, wobei dieses Gehäuse (159) ein vorzugsweise oben zur Rückseite (161) der Maschine (101) abgewinkeltes Führungsblech (156) zum Führen der Schwarte bzw. Haut oder Schwarten- oder Hautstücken (9a) aufweist.

10. Maschine nach einem der Ansprüche 1 bis 9, dadurch gekennzeichnet, daß das Antriebs- und Schaltgehäuse (159) einerseits und die abgeklappte maschinelle Zuführung (107) innerhalb der Basistiefe (T) der Maschine (101) untergebracht sind und daß vorzugsweise die Oberseite eines Pedal-Schutzbügels (160) in Richtung der Maschinen-Rückseite (161) unterhalb dieser abgeklappten maschinellen Zuführung (107) als Stellfläche (162) für einen Schwartenkübel (139) ausgebildet ist.

11. Maschine nach einem der Ansprüche 1 bis 10, dadurch gekennzeichnet, daß sich an dem Messerhalter (33) ein an der Rückseite (161) oberhalb des Antriebs- und Schaltgehäuses (159) und dem Bereich der Maschine (101) herausführendes Ablaufblech (163) befindet.

12. Maschine nach einem der Ansprüche 1 bis 11, dadurch gekennzeichnet, daß die maschinelle Zuführung (107) in der Gegend ihres Aufnahmeendes (110) handgriffartig ausgebildet ist, vorzugsweise, daß die Seitenflansche (143, 144) dieser maschinellen Zuführung (107) im Bereich der Umlenkrolle (137) als Handgriffe (165) ausgebildet sind.

13. Maschine nach einem der Ansprüche 1 bis 12, dadurch gekennzeichnet, daß die Seitenflansche (143, 144) im Zwischenbereich (167) zwischen dem oberen (17) und unteren Trum (18) des Transportbandes (7) od. dgl. Lochungen (182) aufweist.

## Claims

1. A machine (101) for removing rind or skin from meat or fish, in particular for derinding bacon, including a machine casing, a blade holder, a blade (4), a feed roller (105) as well as a feeding device (102) which is devised to be convertible for feeding the material (6) for derinding or similar processing mechanically or manually, for mechanical feeding provision being made for a mechanical feed (107) equipped with a conveyor belt (7) or the like and for manual feeding provision being made for a table (113) attachable in front of the feed roller (105), and the distance of a service point (111) from the processing point (3) being variable, particular reducible for manual feeding, characterized in that the mechanical feed (107), which is equipped at least at its end in the direction of the feed roller with a means protecting against access (141), is collapsible together with the entire conveyor belt (7) and in the collapsed position the means (141) which protects against access and belongs to the mechanical feed serves as a support for the table (113).

2. The machine as claimed in claim 1, characterized in that the entire mechanical feed (107) is collapsible into a position which is at least approximately vertical.

3. The machine as claimed in either of claims 1 or 2, characterized in that the mechanical feed (107) or similar collapsing part takes the form of a feeding device (102) which in the operating position precludes access to an operator with the exception of the receiving end (110) thereof and preferably has essentially closed side flanges (143, 144) at the upper edge of which lattice bars (145) or the like appropriately form a closure which cannot be reached through but can be seen through.

4. The machine as claimed in any one of claims 1 to 3, characterized in that the collapsible mechanical feed (107) thereof is collapsible about a swivel axis lying at least near to the driving roller (138) for the conveyor belt (7), it being appropriate for the swivel axis (12) of said mechanical feed (107) and the axis of rotation of said driving roller (138) to coincide, the collapsible mechanical feed (107) preferably being adapted to be fixed in its collapsed position by means of a stop (146) integral with the machine, preferably in the natural, lowest position of said collapsible feed (107) or the like.

5. The machine as claimed in any one of claims 1 to 4, characterized in that a back-up roller (108) is mounted in the machine casing (23) so as to be fixed and exchangeable, said back-up roller preferably having a shaft (147) having at its drive end (148) a counterpart to a dog coupling (149) and at its other end a connecting part (151) for a removable bayonet lock bearing (150).

6. The machine as claimed in any one of claims 1 to 5, characterized in that the table (113) is essentially formed by an angular sheet-metal member (152), the one side of the latter forming a bearing surface (136) of the table and the other side being provided as a covering and fastening part (153) for resting upon the lattice bars (145a, 145b) at the top when the mechanical feed (107) is in the collapsed position or upon similar parts protecting against access, the covering and fastening part (153) preferably having a retaining hook (154) for engaging behind at least one lattice bar (145a) or the like.

7. The machine as claimed in any one of claims 1 to 6, characterized in that supporting flanges (155) integral with the machine casing are provided on the machine casing (23) at the areas where the driving roller (138) protrudes, the bearing surface (136) of the table (113) being able to support itself against said flanges at a small distance from the conveyor belt (7).

8. The machine as claimed in any one of claims 1 to 7, characterized in that the collapsible mechanical feed (107) is adapted to be fixed in its operating position to a closed protective hood (120) by way of an interlocking device (157), preferably latches (158) on the one hand being pivoted to the protective hood (120) and with their free end engaging in a hook-like manner under a lattice bar (145b) or similar holding element.

9. The machine as claimed in any one of claims 1 to 8, characterized in that the machine casing (23) is devised to be essentially U-shaped in the front view, that it bears the protective hood (120), feed roller (105), blade (4) etc. in the region of the upper, free sides of the U and has a foot pedal (142) at the bottom in the region of the crosspiece of the U, in the open region of the U-shaped machine casing (23) the mechanical feed (107) assuming the collapsed position in the inside area of the U-sides and there preferably being in said inside area of said U-sides a casing (159) for the drive and electrical control adjacent but in spaced relationship to the collapsed feeding device (102), said casing (159) having an angular guide plate (156) preferably open to the rear (161) of the machine (101) and serving to guide the rind, skin or rind or skin pieces (9a).

10. The machine as claimed in any one of claims 1 to 9, characterized in that the casing (159) for the drive and electrical control on the one hand and the collapsed mechanical feed (107) are accommodated within the depth T of the base of the machine (101) and that in the direction of the rear (161) of the machine, underneath said collapsed mechanical feed (107), preferably the upper side of a pedal guard (160) takes the form of a surface (162) on which to stand a rind bin (139).

11. The machine as claimed in any one of claims 1 to 10, characterized in that at the blade holder (33) there is a discharge chute (163) leading out of the area of the machine (101) at the rear (161) above the casing (159) for the drive and electrical control.

12. The machine as claimed in any one of claims 1 to 11, characterized in that the mechanical feed (107) takes a handle-like form in the region of its receiving end (110), preferably that the side flanges (143, 144) of said mechanical feed (107) take the form of handles (165) in the region of the guide pulley (137).

13. The machine as claimed in any one of claims 1 to 12, characterized in that the side flanges (143, 144) have holes (182) in the area (167) inbetween the upper half (17) and lower half (18) of the conveyor belt (7) or the like.

**Revendications**

1. Machine (101) à découenner ou dépiauter de la viande ou du poisson, en particulier pour le découennage du lard, comprenant un caisson, un porte-lame, une lame (4), un cylindre de traction (105), ainsi qu'un dispositif d'amenée (102) réalisé convertible pour une délivrance automatique ou manuelle du produit (6) à découenner ou produit traité similaire, un système automatique d'amenée (107) muni d'une bande transporteuse (7) ou élément similaire, ainsi qu'un plateau reposoir (113) pouvant être amené devant le cylindre de traction (105), étant respectivement prévus pour la délivrance automatique et pour la délivrance manuelle, et la distance séparant une zone d'actionnement (111) de la zone de traitement (3) pouvant être modifiée, notamment raccourcie en vue d'une délivrance manuelle, caractérisée par le fait que le système automatique d'amenée (107), pourvu d'une protection anti-accès (141) au moins à son extrémité située côté cylindre de traction, peut être rabattu avec la bande transporteuse complète (7), et la protection anti-accès (141) du système automatique d'amenée sert, dans la position escamotée, de soutien pour le plateau reposoir (113).

2. Machine selon la revendication 1, caractérisée par le fait que le système automatique d'amenée (107) peut être intégralement rabattu jusqu'à une position au moins approximativement verticale.

3. Machine selon la revendication 1 ou 2, caractérisée par le fait que le système automatique d'amenée (107) ou partie escamotable similaire est réalisé sous la forme d'un dispositif d'amenée (102) fermé en position de service, hormis son extrémité réceptrice (110), en interdisant l'accès d'un opérateur, et présente préférentiellement des ailes latérales (143, 144) substantiellement fermées, sur le bord supérieur desquelles des barreaux (145) ou éléments similaires forment, commodément, une obturation infranchissable, mais à travers laquelle l'oeil peut regarder.

4. Machine selon l'une des revendications 1 à 3, caractérisée par le fait que son système automatique d'amenée (107) rabattable peut être rabattu autour d'un axe de pivotement situé au moins à proximité du cylindre (138) d'entraînement de la bande transporteuse (7), l'axe de pivotement (12) de ce système automatique d'amenée (107) et l'axe de rotation dudit cylindre d'entraînement (138) coïncidant judicieusement ; machine dans laquelle, de préférence, le système automatique d'amenée (107) rabattable peut être arrêté dans sa position escamotée au moyen d'un taquet (146) solidaire de la machine, de préférence dans la position naturelle la plus basse de ce système rabattable d'amenée (107) ou système similaire.

5. Machine selon l'une des revendications 1 à 4, caractérisée par le fait qu'un cylindre presseur (108) est installé stationnairement et avec faculté de remplacement dans le caisson (23) de la machine, ce cylindre presseur comportant de préférence un arbre (147) qui présente, à son extrémité menante (148), une pièce complémentaire d'un accouplement d'entraînement (149) et, à son autre extrémité, une pièce (151) de solidarisation avec un palier amovible (150) à fermeture baïonnette.

6. Machine selon l'une des revendications 1 à 5, caractérisée par le fait que le plateau reposoir (113) est formé pour l'essentiel par une pièce en tôle coudée (152), dont l'une des branches constitue une surface de contact (136) du plateau et dont l'autre branche est prévue en tant que partie (153) de recouvrement et de fixation, destinée à venir s'appliquer sur les barreaux (145a, 145b) ou pièces similaires de protection anti-accès qui occupent une position supérieure dans la position escamotée du système automatique d'amenée (107), la partie (153) de recouvrement et de fixation présentant, de préférence, un crochet de retenue (154) pour emprisonner, par-derrière, au moins un barreau (145a) ou élément similaire.

7. Machine selon l'une des revendications 1 à 6, caractérisée par le fait que des flasques de contact (155) assujettis au caisson de la machine sont prévus sur ce caisson (23), dans les zones de sortie du cylindre d'entraînement (138), flasques contre lesquels la surface de contact (136) du plateau reposoir (113) peut prendre appui à faible distance de la bande transporteuse (7).

8. Machine selon l'une des revendications 1 à 7, caractérisée par le fait que le système automatique d'amenée (107) rabattable peut être arrêté dans sa position de service, par l'intermédiaire d'un mécanisme de verrouillage (157), avec un capot protecteur (120) occupant sa position fermée ; machine dans laquelle, de préférence, des verrous pivotants (158) sont d'une part articulés sur le capot protecteur (120) et emprisonnent par-dessous à la manière de crochets, par leur extrémité libre, un barreau (145b) ou élément de retenue similaire.

9. Machine selon l'une des revendications 1 à 8, caractérisée par le fait que le caisson (23) de cette machine est réalisé substantiellement configuré en U observé en élévation frontale ; et par le fait qu'il porte le capot protecteur (120), le cylindre de traction (105), la lame (4), etc. au voisinage des branches supérieures libres du U, et présente une pédale (142) en partie basse, au voisinage de la membrure transversale du U ; machine dans laquelle, dans la zone ouverte du caisson (23) en U de cette machine, le système automatique d'amenée (107) pénètre jusqu'à la position escamotée dans la zone intérieure des branches du U, et le carter (159) d'une partie d'entraînement et de commutation se trouve de préférence dans cette zone intérieure desdites branches du U, au voisinage, mais à distance du dispositif d'amenée (102) rabattu ; et dans laquelle ce carter (159) comporte une tôle de guidage (156) coudée de préférence en partie haute, vers la face postérieure (161) de la machine (101), afin de guider respectivement la couenne ou la peau, ou bien des fragments (9a) de couenne ou de peau.

10. Machine selon l'une des revendications 1 à 9, caractérisée par le fait que le carter (159) d'entraînement et de commutation, d'une part, et le système automatique d'amenée (107) rabattu sont installés dans les limites de la profondeur de base (T), de la machine (101) ; et par le fait que, de préférence, la face supérieure d'un étrier (160) protège-pédale est réalisée en direction de la face postérieure (161) de la machine, au-dessous de ce système automatique d'amenée (107) rabattu, sous la forme d'une surface (162) de réception d'un baquet (139) à couennes.

11. Machine selon l'une des revendications 1 à 10, caractérisée par le fait qu'une tôle d'évacuation (163), dépassant au-delà de la face postérieure (161) au-dessus du carter (159) d'entraînement et de commutation, et au-delà de la région de la machine (101), se trouve sur le porte-lame (33).

12. Machine selon l'une des revendications 1 à 11, caractérisée par le fait que le système automatique d'amenée (107) est réalisé à la manière d'une poignée dans la région de son extrémité réceptrice (110) ; et de préférence par le fait que les ailes latérales (143, 144) de ce système automatique d'amenée (107) sont réalisées sous la forme de poignées (165) au voisinage du rouleau de renvoi (137).

13. Machine selon l'une des revendications 1 à 12, caractérisée par le fait que les ailes latérales (143, 144) présentent des perforations (182) dans la région intercalaire (167) entre les brins supérieur (17) et inférieur (18) de la bande transporteuse (7) ou élément similaire.

Fig. 1

Fig. 2

Fig. 3

Fig. 4

Fig. 5